# EUROPEAN PATENT SPECIFICATION

(11) **EP 4 102 167 B1**
(45) Date of publication and mention of the grant of the patent: **31.01.2024**
(21) Application number: 21178032.5
(22) Date of filing: 07.06.2021
(51) Int. Cl.: F28D 20/00, F28F 7/02, C09K 5/14, H05B 3/00, F24H 1/20, F24H 1/14, F28D 1/02, H05B 3/60

(54) **A THERMAL SYSTEM FOR THERMAL ENERGY STORAGE**
THERMISCHES SYSTEM ZUR WÄRMEENERGIESPEICHERUNG
SYSTÈME THERMIQUE POUR STOCKAGE D'ÉNERGIE THERMIQUE

(43) Date of publication of application: 14.12.2022
(73) Proprietor: GGD Global Green Developer APS, 5000 Odense C (DK)
(72) Inventor: LINDHARDT OLSSON, Søren, Surrey, CR0 1NG (GB); LINDHARDT OLSSON, Iben, 5350 Martofte (DK)
(74) Representative: Budde Schou A/S

(56) References cited:
- CH-A5- 600 276
- DE-A1-102014 104 719
- DE-B- 1 106 045
- KR-B1- 102 192 323
- RU-C1- 2 148 215
- US-A- 4 016 297
- US-A1- 2020 063 012
- Page: "Technical Information Document Direct Process Heating Ohmic Direct Resistance Heating Direct Process Heating Ohmic Direct Resistance Heating", , 31 July 2019 (2019-07-31), XP055869301, Retrieved from the Internet: URL:https://genless.govt.nz/assets/Busines s-Resources/Direct-process-heating-ohmic-d irect-resistance-heating.pdf [retrieved on 2021-12-03]
- Anonymous: "Elektrodenkessel - Wikipedia", , 16 May 2021 (2021-05-16), XP055869296, Retrieved from the Internet: URL:https://de.wikipedia.org/w/index.php?t itle=Elektrodenkessel&oldid=212044517 [retrieved on 2021-12-03]

## Description

### TECHNICAL FIELD

The present invention relates to the field of energy storage and more specifically to a method of thermal energy storage and the subsequent use of said thermal energy.

### BACKGROUND OF THE INVENTION

It is well known that many renewable energy sources, such as wind power and solar power, face the challenge of generating electricity dependent on environmental conditions and independently of the consumption or demand. Thus, there is a need for ways of storing excess generated energy such that it can be used at a later time where the demand exceeds the production capacity.

Electrical battery storage faces many challenges and alternatives have been sought where the electrical energy is instead converted to and stored as thermal energy. However, such systems face challenges of their own.

Several variants of heat storing systems are known in the art. Many of these systems rely on driving an electric current through a block of material, thereby heating the material of the block. By insulating to block and minimizing thermal loss, it is possible to store the energy as thermal energy in the block for a prolonged period of time. The thermal energy may subsequently be transferred through heat exchange to other systems and utilized when and where the energy is needed.

Such heat-storing systems need to be constructed by a material which is electrically conductive and which has a high heat-storing capacity.

Some heat-storing systems use a block of metal, but while metal provides good electrical properties and good heat-storing capacities, the physical and chemical effects from heating metals provide several downsides. Heating metal causes the metal to expand and possibly melt, which makes it difficult to contain systems using metal for heat storage. Furthermore, heating of metal promotes rapid oxidation of the surface of the metal. While metals that overcome these challenges exist, they tend to be very expensive and thus not suitable for large-scale energy storage.

It has been attempted to alleviate the challenges of metal storage units by producing storage units being made not fully of metal but of a combination of metals and other materials, such as stone or concrete. However, constructing such systems in a manner that ensures even thermal distribution and good electrical properties remains expensive.

As an alternative to metal, variants of thermal storage units using salt as an electrolytic conductor have been made. However, for the salts to be able to move freely and provide good electrical conductivity, such systems rely on molten salts or molten salt solutions. The molten salts are, however, challenging to store, due to the demands on the properties of material of the required containers, which are subjected to both heat and the corrosive environment of the melted salts.

Examples of systems for heating material using current are disclosed in the following documents: RU2148215C1, "Technical Information Document Direct Process Heating Ohmic Direct Resistance Heating Direct Process Heating Ohmic
Direct Resistance Heating" from the internet on https://genless.govt.nz/assets/Business-Resources/Direct-process-heating-ohmic-direct-resistance-heating.pd, DE102014104719A1, US2020/063012A1, and US4016297A.

### SUMMARY OF THE INVENTION

It is an object of the present invention to provide a thermal system for converting electrical energy to thermal energy and storing the thermal energy, where the thermal system is cheap and easy to produce and contain while providing good thermal and electrical properties.

The above object and advantages, together with numerous other objects and advantages, which will be evident from the description of the present invention, are according to a first aspect of the present invention obtained by:
A thermal system for thermal energy storage, the thermal system comprising the features of claim 1.

A storage medium comprising a thermal filler and an ionic compound provides the benefits of having the stable properties of the thermal filler, which may be a cheap and resilient material, as well as the conductive properties of the ionic compound.

According to a further variant of the first aspect of the invention, the storage medium constitutes a solid, the ionic compound being dissolved and distributed in the solid. Having a storage medium in a solid state makes it easier for the storage medium to be stored and contained. While structure and insulation around the storage medium may be desired, it is not a necessity, and the material requirements of any surrounding structure are limited.

According to a further embodiment of the first aspect of the invention, the thermal system comprises a frame for supporting the insulator and the storage medium.

According to a further variant of the first aspect of the invention, the thermal system comprises an insulator and/or a frame further comprising a first rod in contact with the first electrode and extending through the insulator and possibly the frame, and a second rod in contact with the second electrode and extending through the insulator and possibly the frame.

According to a further embodiment of the first aspect of the invention, the ionic compound is a salt or a mix of multiple salts, such as sodium chloride and/or calcium chloride.

Many salts are cheap and readily available, which is beneficial for the large-scale usage of thermal systems using salts as the ionic compound.

According to a further variant of the first aspect of the invention, the first electrode is exchangeable, and the second electrodes are exchangeable.

The first and second electrodes are preferably made of metal, such as but not limited to copper. While the thermal filler helps lessening the impact of corrosive effect of salt compared to systems made purely of salt, the electrodes will still be worn over time. Making the electrodes replaceable thus contributes to prolonging the lifetime of the thermal system.

According to a further variant of the first aspect of the invention, the first and second electrodes are at least partially embedded in the storage medium.

According to a further embodiment of the first aspect of the invention, the first and second electrodes each comprises an end plate and one or more ribs, the ribs extending normal to the end plate and being at least partially embedded in the storage medium.

According to a further variant of the first aspect of the invention, the fluid conduit is at least partially embedded in the storage medium.

According to a further variant of the first aspect of the invention, the fluid conduit is arranged on the outside of the storage medium.

Another object of the present invention is to provide a method of utilizing thermal energy stored in the storage medium of a thermal systems, specifically utilizing the energy by transferring it to one or more external systems.

According to a second aspect of the present invention, the above objects and advantages are obtained by:
a method of heating fluid, the method comprising:
providing a thermal system according to claim 1, and
connecting the thermal system to an external electric power source and inducing a current in the storage medium by means of the first and second electrode, such that the storage medium is being heated; and
providing an external fluid system having a further fluid conduit for heating a fluid or a space, and
connecting the fluid conduit to the external fluid system, such that heat is being exchanged between the storage medium and the further fluid conduit of said heating system when circulating fluid through the fluid conduits

According to a further embodiment of the second aspect of the invention, the polarity of the first and second electrodes are repeatedly reversed.

According to a further variant of the second aspect of the invention, the storage medium is cast from a multi-component mixture in aqueous solution.

According to a further variant of the second aspect of the invention, the fluid is water.

According to a further embodiment of the second aspect of the invention, the storage medium is heated to a temperature of at least 100 °C by means of the current.

According to a further variant of the second aspect of the invention, the external fluid system delivers steam for driving at least one electricity-generating means, such as a steam turbine.

According to a further embodiment of the second aspect of the invention, the storage medium is heated to around 60 °C, the external fluid system being connected to district heating.

### SHORT LIST OF THE DRAWINGS

In the following, example of embodiments are described according to the invention, where:
Fig. 1 is a schematic illustration of how the thermal system can be incorporated in a power grid.
Fig. 2 is a cross-sectional view of a thermal system.
Fig. 3 is a thermal system shown in perspective and with cut-away regions.

### DETAILED DESCRIPTION OF THE DRAWINGS

The invention will now be explained in more detail below by means of examples with reference to the accompanying drawings.

The invention may, however, be embodied in different forms than depicted below, and should not be construed as limited to any examples set forth herein. Rather, any examples are provided so that the disclosure will be thorough and complete, and will fully convey the scope of the invention to those skilled in the art. Like reference numerals refer to like elements throughout. Like elements will, thus, not be described in detail with respect to the description of each figure. A detailed description of embodiments of an autonomous dispensing system as well as a method for use of such a system will be provided.

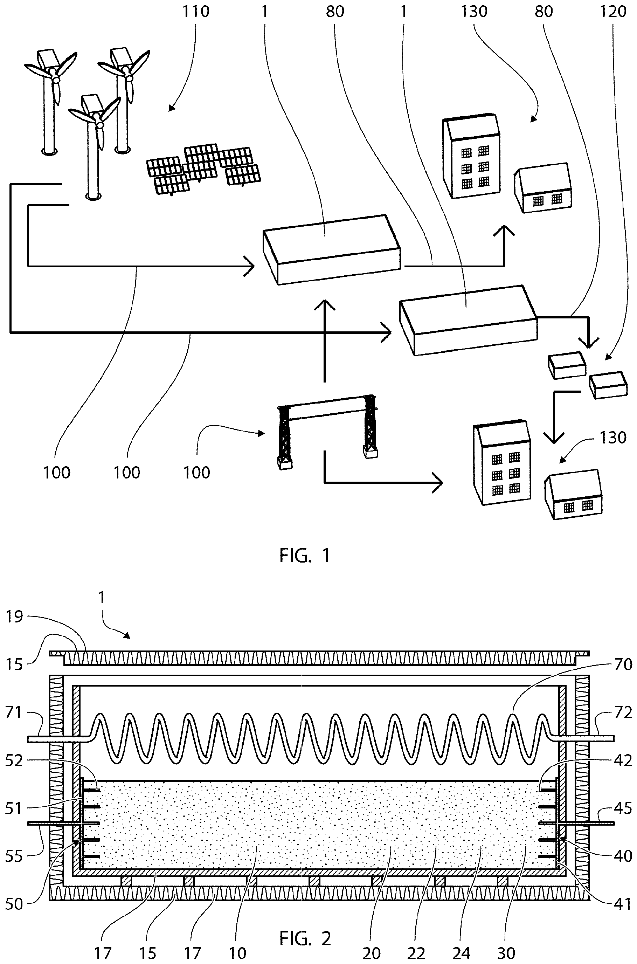

**Fig. 1** shows a conceptual sketch of how the thermal storage system may be used for energy storage and energy use by connection to a power grid.

Electrical energy generation 110 takes place independently of the thermal system 1. The electrical energy may for example be generated through wind power, solar power or other sources that generate power independently of the energy consumption in the power grid. The generated electrical energy is then led through part of the power grid 100 to the thermal system 1.

In the thermal system 1 the electrical energy is stored as thermal energy. The thermal energy of the thermal system 1 may then be directed towards different uses.

In some variants of the system the thermal energy of the thermal system 1 may be sent directly to end users 130 and be used for district heating.

In other variants of the system the thermal energy of the thermal system 1 may be used for the heating of a fluid of an external fluid system (not shown). This heating can then be used to convert the thermal energy back to electricity using energy converters 120 such as steam turbines or boiler generators. The electrical energy converted from the thermal energy of the thermal system 1 can then be consumed by the end users 130 in the form of electrical power. This has the benefit of making it possible to store the energy generated in electric form as thermal energy at a time where said electrical energy is in excess of the consumption by the end users 130. The thermal energy can then be converted back to electric form once there is again a demand for more electric power in the power grid 100. While there will be a loss of energy during the conversions, it is still beneficial to be able to use the energy at a later point. Using the thermal energy for district heating has the further benefit of decreasing the conversion loss, as only one conversion needs to take place.

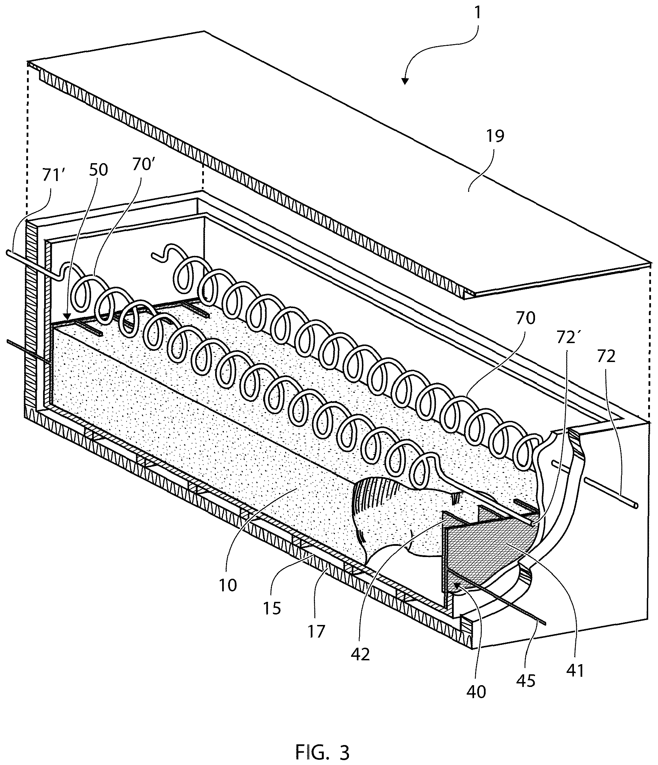

**Fig. 2** **and** **Fig. 3** illustrate components of the thermal system 1. Fig. 2 shows an embodiment of the thermal system 1 in a cross-sectional view, while Fig. 3 shows another embodiment of the thermal system 1 in a partially cut-away perspective.

The thermal system 1 comprises a storage medium 10 for storing the thermal energy. The storage medium 10 is arranged between a first electrode 40 and a second electrode 41 for inducing a current through the storage medium 10.

The storage medium 10 comprises a thermal filler 20 and an ionic compound 30. In a preferred embodiment the storage medium constitutes a solid thermal filler 20, and the ionic compound 30 is distributed in said solid. The ionic compound 30 enables the conducting of electric current from the first electrode 40 to the second electrode 50, through the storage medium 10. Hence, the ionic compound 30 must be distributed throughout the storage medium, such that at least one current-conducting path is enabled across the storage medium 10 between the first 40 and second electrode 50. In a preferred embodiment, the current driven through the storage medium 10 from the first electrode 40 to the second electrode 50 is a direct current.

In such preferred embodiments the thermal filler is cast from one or more plasters. By a plaster is understood a material comprising powder, grains, and/or pieces which when mixed with a liquid and allowed to cure turns into a solid. The solid structure obtained through this process is a thermal filler 20.

In a preferred embodiment a first plaster 22 used for casting the storage medium 10 constitutes a binder. In a more preferred embodiment, the first plaster 22 is either cement or gypsum.

In another preferred embodiment, the thermal filler 20 is cast from a mixture of at least a first plaster 22 and a second plaster 24. In such a preferred embodiment the first plaster 22 has a higher electrical conductivity than the second plaster 24, while the second plaster has a lower heat capacity than the second plaster 24. In such a preferred embodiment the first plaster 22 may be cement, and the second plater 24 may be gypsum. It is to be understood that other plasters may be used, just as a combination with additional plasters included in the mix is also within the scope of the invention.

In a preferred embodiment the ionic compound 30 distributed in the storage medium 10 is a salt or a mix of multiple salts. Such salts may for example be, but are not limited to, sodium chloride or calcium chloride.

In a preferred embodiment the storage medium 10 is cast by mixing a first plaster 22 and optionally a second plaster 24 with a liquid solution 32 (not shown), where the solution 32 constitutes ionic compounds 30 dissolved a liquid. In a more preferred embodiment this method of casting the storage medium 10 constitutes dissolving a salt in a liquid used for mixing with the first plaster 22 and possibly the second plaster 24 to be cured. By casting the storage medium with the solution 32, being made in part by dissolved ionic compounds 30, it is ensured that the ionic compounds 30 are dispersed throughout the storage medium 10 once it is cast.

In one embodiment, the solution 32 comprises a salt or a mix of multiple salts at least partially dissolved in water. In a preferred embodiment, the solution is saturated with the salts. In yet more preferred embodiments, the solution is mixed, such that there is an oversaturation of salt, and the storage medium 10 is cast by combining a first plaster 22, optionally a second plaster 24, and undissolved salt with a solution 32 saturated with the same salt dissolved in water. Thereby, the ionic compound 30 is dispersed in the storage medium 10, both as solid grains of salt and due to the salt being dissolved in the solution 32 used in the curing process.

In one variant of this embodiment the solution 32 is mixed with a mass ratio of salt to water in the range of 0.7-1.3. In another variant of this embodiment the solution 32 is mixed with a mass ratio of salt to water in the range of 0.9-1.1. In a yet more preferred variant of this embodiment the ratio of salt to water is about 1, which leads to a saturated solution of salt dissolved in water and excess salt, which may then be included in the mixture used for casting the storage medium 10.

In a preferred variant of the invention the solution 32 and the first 22 and/or second plaster 24 are mixed in an amount being 200-600 ml of the solution 32 to 0.8-1.5 kg of plaster or a multiple thereof, i.e. the total amounts may differ while the ratio of plaster to liquid solution remains the same. In a more preferred variant, the storage medium 10 is cast from a mixture where the amounts are multiples of 400 ml of the solution 32 to 1 kg of plaster, e.g. a first plaster 22 or a mix of a first plaster 22 and a second plaster 24.

The first electrode 40 and the second electrode 50 are in electrical contract with the storage medium 10. Thus, it is possible to drive a current through the storage medium 10 between the first 40 and second electrode 50. The first 40 and second electrode 50 are arranged such that an electric current runs between the first 40 and second electrodes 50. The current must move through the storage medium 10. It is this passage of an electric current through the storage medium 10 that heats the storage medium 10, thereby converting electrical energy to thermal energy, which may be stored in the storage medium 10 for later use, e.g. for heating or for driving generators that can create electrical energy once more.

In an embodiment of the invention a direct current is passed from the first electrode 40 to the second electrode 50. In a preferred embodiment the polarity of the first electrode 40 and the second electrode 50 is repeatedly reversed throughout the heating processes. Reversing the polarity of the electrodes affects the polarity of the ionic compounds 30 in the storage medium, and the storage medium 10 is heated more quickly. The frequency of the polarity reversal may vary during use of the thermal system 1 to control the speed with which the storage medium 10 is heated. In a preferred embodiment the polarity is reversed between 1 and 50 times an hour.

The first electrode 40 is exchangeable such that it may be exchanged with a new component having the same functionality as the first electrode 40. Similarly, the second electrode 50 is exchangeable. This allows prolonging of the lifetime of the thermal system 1, as the electrodes may be exchanged once they become worn.

In a preferred embodiment the first electrode 40 is constructed with a first endplate 41 and a first set of ribs 42, at least part of said ribs extending normal to the first endplate 42. The first endplate 41 may contact part of the surface of the storage medium 10, while in a preferred embodiment at least part of the first set of ribs 42 is embedded in the storage medium 10. The ribs may have any shape, as long as they extend at least partially normal to the first end plate 41 of the first electrode 40. In a preferred embodiment, as illustrated in Figs. 2 and 3, the ribs 42,52 are plates extending normal to the first 41 and second end plate 51, respectively. In another embodiment the ribs may be substantially straight rods that extend fully normal to said first endplate 41. In yet another variant, the ribs form U-turns, in which case only parts of the ribs extend normal to the first endplate 41, while another part of the ribs is substantially parallel to the first end plate 41.

It is to be understood that the first set of ribs 42 may comprise any number of ribs, i.e. it may be a single rib extending at least partially normal to said first endplate 42, or it may be a plurality of ribs extending at least partially normal to said first endplate 42. Furthermore, the ribs 42,52 may be arranged in any manner. In one variant, the ribs 42,52 may be arranged substantially parallel with respect to the surface of the storage medium 10, as shown in Fig. 2. In another variant, the ribs 42,52 may be arranged substantially perpendicular with respect to the surface of the storage medium 10, as shown in Fig. 3.

The structure of the second electrode 50 is like that of the first electrode 40. Hence, the second electrode 50 comprises a second endplate 51 and a second set of ribs 52 extending at least partially normal to the second endplate 52. The different variants described for the first electrode 40 also apply to the second electrode 50. In a preferred embodiment of the thermal system, the first electrode 40 and the second electrode 50 are constructed in the same manner, such that the first electrode 40 and the second electrode 50 are identical and/or mirrored with respect to each other. In other variants of the thermal system 1 the first electrode 40 and the second electrode 50 may be constructed differently, e.g. the dimensions of the first 41 and second endplates 51 may differ, or the number or geometry of the first set of ribs 42 and the second set of ribs 52 may differ.

In a preferred embodiment of the invention the thermal system 1 further comprises an insulator 15. The insulator 15 at least partially surrounds the storage medium 10. The insulator 15 decreases thermal loss to the surrounding environment 5. In a preferred embodiment the storage medium is completely surrounded by the insulator 15. The insulator 15 may be made from any material with a lower specific heat capacity than the heat capacity of the storage medium 10. While a greater difference is preferable for the efficiency of the insulator 15, the choice of insulator 15 will also be affected by cost. The insulator 15 may for example be stone-based mineral fibre insulation, such as rockwool, glass wool other types of fibre insulation, such as wood fibres or polyester or foam insulation, such as but not limited to polystyrene. In some embodiments, the thermal system 1 comprises an insulator 15 made from multiple different materials. In other embodiments, the thermal system 1 comprises multiple insulator layers.

In a preferred embodiment, the thermal system 1 comprises a frame 17 for supporting the storage medium 10 and the insulator 15. The frame 17 may be a box or any other shape. In a preferred embodiment, the frame 17 may comprise walls in the form of plates. In some embodiments of the thermal system 1, the frame may comprise multiple layers, as shown in Figs. 2 and 3, where the frame has an inner layer which is partially in direct contact with the storage medium 10 and an outer layer which is spaced apart from the inner layer of the frame 17. In embodiments with multiple layers of the frame 17, each layer may have walls, as shown in Figs. 2 and 3. In other variants of embodiments having multiple layers, one layer may be made of supporting bars while another layer is made from plates forming walls. In other embodiments, the frame 17 may comprise a single layer.

In a preferred embodiment, the frame 17 comprises a lid 19, and when the lid 19 is mounted on the remainder of the frame 17, the frame 17 fully encloses the storage medium 10 and at least partially encloses the insulator 15.

In some variants, the insulator 15 may be integrated in the frame 17, as shown in Figs. 2 and 3. In some variants, the insulator 15 may be separate from the frame 17, e.g. being located between the storage medium 10 and the frame. Such variants may be combined such that the insulator 15 is integrated in the frame 17 and additional insulator material is located between the frame 17 and the storage medium 10. In such cases, the same type of insulator may be used, or different kinds of insulator material may be used.

In preferred embodiments of the invention the thermal system 1 further comprises a first rod 45. The first rod 45 is in electrical contact with the first electrode 40 and the first rod 45 further extends through the insulator 15, and in embodiments of the thermal system 1 comprising a frame 17 the first rod 45 also extends through the frame 17. Thus, the first rod 45 provides an electrical connection to the first electrode 40 which may be accessed from outside the insulator 15 and possibly also the frame 17.

Preferably, the thermal system 1 further comprises a second rod 55, which is in electrical contact with the second electrode 50. The second rod 55 extends through the insulator 15 and possibly through the frame 17 in embodiments comprising a frame 17, same as described for the first rod 45.

The thermal system 1 may be connected to a power grid 100 through the first rod 45 and/or the second rod 55.

In a preferred embodiment, the thermal system 1 comprises a fluid conduit 70, which is in thermal contact with the storage medium. By thermal contact is understood that thermal exchange can take place between the fluid conduit 70 and the storage medium 10. In some variants the thermal exchange may be facilitated by direct physical contact between part of the fluid conduit 70 and part of the storage medium 10. In other variants the thermal exchange may be facilitated by the fluid conduit 70 being in enclosed with storage medium 10, whereby the enclosed space and any fluid, such as air, surrounding the fluid conduit 70 is heated. In yet other variants, the thermal exchange may be facilitated by thermal radiation from the storage medium. In such variants it is preferable to have close spatial proximity of the fluid conduit 70 to the storage medium 10.

In preferred embodiments, the fluid conduit 70 is enclosed within the frame 17 and is further at least partially surrounded by the insulator 15.

The fluid conduit 70 comprises a fluid inlet 71 and a fluid outlet 72, such that a fluid may enter into the fluid conduit 70 through the fluid inlet 71 and exit the fluid conduit 70 through the fluid outlet 72. The fluid inlet 71 and fluid outlet 72 enable the connection of the fluid conduit 70 of the thermal system 1 to an external fluid system 80 (see Fig. 1) having a second fluid conduit (not shown). By circulating a fluid through the first fluid conduit 70 of the thermal system 1 and the second fluid conduit of the external fluid system 80, heat is exchanged between the storage medium 10 via the first fluid conduit 70 to the external fluid system 80. In a preferred embodiment the fluid circulated through the fluid conduit 70 is water.

The external fluid system 80 may for example be district heating, where the heated fluid it transferred through the external fluid system 80 to end users 130 (see Fig. 1), where it can for example contribute to space heating. For such variants, the storage medium 10 is preferably heated to around 60 °C by running current through the storage medium 10. This allows the fluid to be heated to around the temperature needed for district heating.

As a different example the external fluid system 80 may be energy converters 120 such as steam turbines or boiler generators. In such situations, it is preferable for the storage medium 10 to be heated to at least 100 °C, such that a fluid such as water may be heated to the point where it undergoes a phase change and turns into steam, which can be used for driving the energy converters 120 or electricity-generating means of the external fluid system 80.

It is to be understood that the same thermal system 1 is compatible with different types of external fluid systems 80, as the temperature of the storage medium 10 may be controlled by the amount of current run through the storage medium 10, the time in which current is driven through the storage medium 10 and/or the reversal of the polarity of the first electrode 40 and the second electrode 50.

In some embodiments of the thermal system 1, the fluid conduit 70 may rest on a surface of the storage medium 10. In other embodiments of the thermal system 1, the fluid conduit 70 may be at least partially embedded in the storage medium 10. In yet other embodiments, examples of which are illustrated in Figs. 2 and 3, the fluid conduit 70 is suspended adjacent to the storage medium 10 without being in direct physical contact with the storage medium 10. In such variants, the fluid conduit may be mounted such that the fluid conduit 70 is held in place by the fluid inlet 71 and fluid outlet 72 extending through the insulator 15 and the frame 17. In other embodiments, the fluid conduit 70 may be held in place by a support 75 (not shown), which may take different forms such as but not limited to a bar extending from one side to another of the frame 17 or loops, hooks or other geometries protruding from the side of the lid 19 facing the storage medium 10. Support 75 (not shown) may also be used to hold the fluid conduit 70 in place in embodiments where the fluid conduit is in contact with the storage medium 10.

In some embodiments of the invention there may be multiple fluid conduits 70,70' mounted in the thermal system 1, as shown in Fig. 3. Each fluid conduit 70,70' comprises a fluid inlet 71,71' and a fluid outlet 72,72'. In the case of multiple fluid conduits 70,70' each fluid conduit may be connected to separate external fluid systems 80, thereby providing thermal energy exchange with separate external fluid systems 80, or the fluid of the fluid conduits 70,70' may exchange heat with fluid of a single external fluid system 80.

In other embodiments of the invention not shown, a single fluid conduit 70 may be mounted in the thermal system 1.

The fluid conduit 70 may take any shape. In some variants it may be a coil, as shown in Fig. 3. In other variants, it may be arranged in various patterns. In yet other variants, the fluid conduit 70 may be straight between the inlet 71 and the outlet 72. However, the fluid path controls for how long a period of time heat exchange may take place between a fluid in the fluid conduit 70 and the storage medium 10. A longer path allows for a longer period of time in which heat exchange can take place. The time of heat exchange is also affected by the flux rate of the fluid.

In an embodiment, the thermal system 1 may be assembled from two or more modules that can be connected to each other. In a preferred variant, the thermal system 1 comprises a storage module and a conduit module. The storage module comprises a storage medium 10, a first electrode 40, and a second electrode 50. The conduit module comprises a fluid conduit 70, which has a fluid inlet 71 and a fluid outlet 72. The conduit module may further comprise support 75 for keeping in place said fluid conduit 70. In a preferred variant, the storage module comprises an insulator 15 and a frame 17, the insulator 15 and the frame 17 preferably enclosing the storage medium 10 on all sides, except the one facing the conduit module when the storage module is connected to the conduit module. In a preferred variant, the conduit module comprises an insulator 15 and a frame 17, the insulator 15 and the frame 17 preferably enclosing the storage medium 10 on all sides, except the one facing the storage module when the storage module is connected to the conduit module. In a more preferred variant, the frame 17 of the storage module and the conduit module comprise connection means for releasably connecting the storage module and the conduit module to each other.

### LIST OF REFERENCE NUMBERS

- 1: Thermal system
- 10: Storage medium
- 15: Insulator
- 17: Frame
- 19: Lid
- 20: Thermal filler
- 22: First plaster
- 24: Second plaster
- 30: Ionic compound
- 40: First electrode
- 41: First endplate
- 42: First set of ribs
- 45: First rod
- 50: Second electrode
- 51: Second endplate
- 52: Second set of ribs
- 55: Second rod
- 70: Fluid conduit
- 71: Fluid inlet
- 72: Fluid outlet
- 75: Support
- 80: External fluid system
- 100: Power grid
- 110: Electrical energy generation
- 120: Energy converters
- 130: End user

## Claims

1. A thermal system for thermal energy storage, said thermal system comprising:
a storage medium (10) for said thermal energy storage,
a fluid conduit for conducting fluid to be heated by said storage medium, said thermal system comprising an inlet into said fluid conduit and an outlet from said fluid conduit (70), such that fluid may enter into said fluid conduit through said inlet and may exit from said fluid conduit through said outlet, and said fluid conducting conduit being in thermal contact with said storage medium,
an insulator (15) for decreasing thermal loss to the surrounding environment, said insulator at least partially surrounding said storage medium,
a first (40) and a second (50) electrode for inducing an electric current in said storage medium,
said storage medium being arranged between said first and second electrode,
**characterized in that** said storage medium comprises a thermal filler (20) and an ionic compound (30).

2. The thermal system according to claim 1, comprising a frame for supporting said insulator and said storage medium.

3. The thermal system according to any of the preceding claims, said ionic compound being a salt or a mix of multiple salts, such as sodium chloride and/or calcium chloride.

4. The thermal system according to any of the preceding claims, said first and second electrodes each comprising an end plate and one or more ribs, said ribs extending normal to said end plate and being at least partially embedded in said storage medium.

5. A method of heating fluid, said method comprising:
providing a thermal system according to claim 1, and
connecting said thermal system to an external electric power source and inducing a current in said storage medium by means of said first and second electrode, such that said storage medium is being heated; and
providing an external fluid system (80) having a further fluid conduit for heating a fluid or a space, and
connecting said fluid conduit (70) to said external fluid system (80) such that heat is being exchanged between said storage medium and said further fluid conduit of said heating system when circulating fluid through said fluid conduits

6. The method of heating a fluid according to claim 5, repeatedly reversing the polarity of said first and second electrodes.

7. The method of heating fluid according to any of the claims 5-6, heating said storage medium by means of said current to a temperature of at least 100 °C.

8. The method of heating fluid according to any of the claims 5-6, heating said storage medium to around 60 °C, said external fluid system being connected to district heating.

## Patentansprüche

1. Thermisches System zur Wärmeenergiespeicherung, wobei das thermische System umfasst:
ein Speichermedium (10) für die Wärmeenergiespeicherung,
eine Fluidleitung zum Leiten von Fluid, das durch das Speichermedium zu erwärmen ist, wobei das thermische System einen Einlass in die Fluidleitung und einen Auslass aus der Fluidleitung (70) umfasst, sodass Fluid durch den Einlass in die Fluidleitung eintreten und durch den Auslass aus der Fluidleitung austreten kann, und die Fluidleitung in thermischem Kontakt mit dem Speichermedium steht, einen Isolator zum Verringern des Wärmeverlusts an die Umgebung, wobei der Isolator das Speichermedium zumindest teilweise umgibt,
und einen Isolator (15) zum Verringern des Wärmeverlusts an die Umgebung, wobei der Isolator das Speichermedium zumindest teilweise umgibt,
eine erste (40) und eine zweite (50) Elektrode zum Induzieren eines elektrischen Stroms in dem Speichermedium,
wobei das Speichermedium zwischen der ersten und der zweiten Elektrode angeordnet ist, **dadurch gekennzeichnet, dass** das Speichermedium einen thermischen Füllstoff (20) und eine ionische Verbindung (30) umfasst.

2. Thermisches System nach Anspruch 1, umfassend einen Rahmen zum Abstützen des Isolators und des Speichermediums.

3. Thermisches System nach einem der vorhergehenden Ansprüche, wobei die ionische Verbindung ein Salz oder eine Mischung aus mehreren Salzen, wie etwa Natriumchlorid und/oder Calciumchlorid, ist.

4. Thermisches System nach einem der vorhergehenden Ansprüche, wobei die erste und die zweite Elektrode jeweils eine Endplatte und eine oder mehrere Rippen umfassen, wobei die Rippen sich senkrecht zu der Endplatte erstrecken und zumindest teilweise in das Speichermedium eingebettet sind.

5. Verfahren zum Erwärmen von Fluid, wobei das Verfahren umfasst:
Bereitstellen eines thermischen Systems nach Anspruch 1, und
Verbinden des thermischen Systems mit einer externen elektrischen Energiequelle und Induzieren eines Stroms in dem Speichermedium mittels der ersten und zweiten Elektrode, sodass das Speichermedium erwärmt wird; und
Bereitstellen eines externen Fluidsystems (80) mit einer weiteren Fluidleitung zum Erwärmen eines Fluids oder eines Raums, und
Verbinden der Fluidleitung (70) mit dem externen Fluidsystem (80), sodass beim Umwälzen von Fluid durch die Leitungen Wärme zwischen dem Speichermedium und der weiteren Fluidleitung des Heizsystems ausgetauscht wird.

6. Verfahren zum Erwärmen eines Fluids nach Anspruch 5, wobei die Polarität der ersten und zweiten Elektrode wiederholt umgekehrt wird.

7. Verfahren zum Erwärmen von Fluid nach einem der Ansprüche 5-6, umfassend Erwärmen des Speichermediums mittels des Stroms auf eine Temperatur von mindestens 100 °C.

8. Verfahren zum Erwärmen von Fluid nach einem der Ansprüche 5-6, wobei das Speichermedium auf etwa 60 °C erwärmt wird, wobei das externe Fluidsystem mit Fernwärme verbunden ist.

## Revendications

1. Système thermique pour stockage d'énergie thermique, ledit système thermique comprenant :
un moyen de stockage (10) dudit stockage d'énergie thermique,
un conduit de fluide pour conduire le fluide à chauffer par ledit moyen de stockage, ledit système thermique comprenant une entrée dans ledit conduit de fluide et une sortie à partir dudit conduit de fluide (70), de sorte que le fluide peut entrer dans ledit conduit de fluide par ladite entrée et peut sortir dudit conduit de fluide par ladite sortie, et ledit conduit conduisant le fluide étant en contact thermique avec ledit moyen de stockage,
un isolant (15) pour diminuer les pertes thermiques dans l'environnement, ledit isolant entourant au moins partiellement ledit moyen de stockage,
une première (40) et une seconde (50) électrode pour induire un courant électrique dans ledit moyen de stockage,
ledit moyen de stockage étant disposé entre lesdites première et seconde électrodes, **caractérisé en ce que** ledit moyen de stockage comprend une charge thermique (20) et un composé ionique (30).

2. Système thermique selon la revendication 1, comprenant un cadre destiné à supporter ledit isolant et ledit moyen de stockage.

3. Système thermique selon l'une quelconque des revendications précédentes, ledit composé ionique étant un sel ou un mélange de plusieurs sels, tels que le chlorure de sodium et/ou le chlorure de calcium.

4. Système thermique selon l'une quelconque des revendications précédentes, lesdites première et seconde électrodes comprenant chacune une plaque d'extrémité et une ou plusieurs nervures, lesdites nervures s'étendant perpendiculairement à ladite plaque d'extrémité et étant au moins partiellement noyées dans ledit moyen de stockage.

5. Procédé de chauffage de fluide, ledit procédé comprenant :
la fourniture d'un système thermique selon la revendication 1, et
la connexion dudit système thermique à une source d'énergie électrique externe et l'induction d'un courant dans ledit moyen de stockage au moyen desdites première et seconde électrodes, de sorte que ledit moyen de stockage est chauffé ; et
la fourniture d'un système de fluide externe (80) présentant un autre conduit de fluide destiné à chauffer un fluide ou un espace, et
la connexion dudit conduit de fluide (70) audit système de fluide externe (80) de sorte que de la chaleur est échangée entre ledit moyen de stockage et ledit autre conduit de fluide dudit système de chauffage lors de la circulation de fluide à travers lesdits conduits de fluide.

6. Procédé de chauffage d'un fluide selon la revendication 5, inversant de manière répétée la polarité desdites première et seconde électrodes.

7. Procédé de chauffage de fluide selon l'une quelconque des revendications 5 et 6, chauffant ledit moyen de stockage au moyen dudit courant à une température d'au moins 100 °C.

8. Procédé de chauffage de fluide selon l'une quelconque des revendications 5 et 6, chauffant ledit moyen de stockage à environ 60 °C, ledit système de fluide externe étant connecté au chauffage urbain.
